# EUROPEAN PATENT APPLICATION

(11) **EP 2 511 819 A2**
(43) Date of publication of application: **17.10.2012**
(21) Application number: 12156283.9
(22) Date of filing: 21.02.2012
(51) Int. Cl.: G06F 9/445

(54) **Creating operating system internet connections for mobile applications**

(30) Priority: 13.04.2011 US 201113085938
(71) Applicant: SAP AG, 69190 Walldorf (DE)
(72) Inventor: Moser, Martin, 69190 Walldorf (DE)
(74) Representative: Richardt Patentanwälte GbR

(57) **Abstract**

The present invention relates to a computer-implemented method for starting a mobile application (415) on a mobile device (405), the method comprising requesting an Internet connection (460) from an operating system (410) of the mobile device (405) for the mobile application (415), and thereafter performing the steps of creating the internet connection (460); loading mobile application data (425) into an internal memory (430) of the mobile device (405) in parallel to creating the internet connection (460); and starting the mobile application (415) in parallel to creating the internet connection (460).

## Description

### Field of the invention

The field generally relates to the software arts, and, more specifically, to methods and systems for creating operating system internet connections for mobile applications.

### Background and related art

Mobile applications represent software applications developed for handheld devices such as personal digital assistants, enterprise digital assistants, and mobile phones.

These applications are either pre-installed on phones during manufacture or downloaded by customers from different vendors. Mobile software is developed by using different platforms and programming languages based on the target mobile device.

Mobile Applications for handhelds and laptops allow customers to mobilize their business processes for handheld devices, such as Personal Digital Assistants (PDAs), and laptops. Target users for mobile applications are those who need to access information while they are away from the office. Users can include sales executives, field service engineers, or delivery personnel, for example. These users occasionally connect to a Data Orchestration Engine (DOE) to synchronize applications and to exchange data. The DOE supports the data exchange between the handheld and the backend system.

Most mobile applications are online applications, that is, they send and request information over an Internet connection from the mobile device to the backend system. Due to the nature of the available technology (mobile carrier waves), establishing an Internet connection from the mobile device could be quite slow. For example, establishing an Internet connection over a mobile carrier such as T-Mobile® or Verizon® could take between two and four seconds. Hence, the response time for the first request made to the backend system is generally significantly higher than the time to send the information to the backend system and process it there. Typically, the transmission of data is in the range of one second per 20KB of information, while server response times are in the range of half a second. Some protocols, such as LTE50, allow for up to ~2.8MB/sec.

### Summary of the invention

It is an objective of embodiments of the invention to provide for a computer implemented method for creating internet connections for mobile applications, data processing system and corresponding computer-readable storage medium. Said objective is solved by the subject matter of the independent claims. Advantageous embodiments are described in the dependent claims.

The term "computer-readable storage medium," as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, punched tape, punch cards, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example data may be retrieved over a modem, over the internet, or over a local area network. References to a computer-readable storage medium should be interpreted as possibly comprising multiple computer-readable storage mediums. Various executable components of a program or programs may be stored in different locations. The computer-readable storage medium may for instance comprise multiple computer-readable storage medium within the same computer system. The computer-readable storage medium may also be computer-readable storage medium distributed amongst multiple computer systems or computing devices.

The term "Computer memory" or "memory" is an example of a computer-readable storage medium. Computer memory is any memory which is accessible by a processor. Examples of computer memory include, but are not limited to: RAM memory, registers, and register files. In some instances a computer memory may also include: a hard disk drive, a floppy drive or a solid state hard drive. For instance, part of a memory may in fact be swap space on a hard drive. References to "computer memory" or "memory" should be interpreted as possibly comprise multiple memories. The memory may for instance comprise multiple memories within the same computer system. The memory may also comprise multiple memories distributed amongst multiple computer systems or computing devices.

The term "in parallel or concurrent" as used herein refers to actions that may include interleaved processing in a single processor such as by time-slicing, or simultaneous processing on multiple processors, by executing, for example, each action or group of actions on its own processor.

The term "TCP" stands for Transmission Control Protocol.
The term "IP" stands for Internet Protocol.
The term "HTTP" stands for Hypertext Transfer Protocol.
The term "HTTPS" stands for Hypertext Transfer Protocol Secure.
The term "CPU" stands for Central Processing Unit.
The term "API" stands for Application Programming Interfaces.

In one aspect, the present invention relates to a computer-implemented method for starting a mobile application on a mobile device, the method comprises requesting an internet connection from an operating system of the mobile device for the mobile application, and thereafter performing the steps of creating the internet connection; loading mobile application data into an internal memory of the mobile device in parallel to creating the internet connection; and starting the mobile application in parallel to creating the internet connection.

There are mobile applications that take up to several seconds to start, that is, several seconds pass before user input is accepted without the mobile application doing any network communication. To establish the internet connection to a backend system, the operating system makes first a mobile connection to a radio access point serving the mobile device. That is, on top of the mobile connection, there is a TCP/IP connection as well. Typically, this takes an undesirable amount of time, because the mobile connection needs to wait for a free slot at the radio access point so that the internet connection can be established. In addition to this waiting time, there is also the time required to load and start the mobile application using that internet connection. All this makes the response time for the first request made to the backend system significantly high. To overcome this issue, the present invention provides a new schedule of the different tasks required to start the mobile application. In parallel to the creation of internet connection (i.e. during the waiting time), all remaining tasks are independently executed. In fact, the internet connection is firstly requested by the operating system, before the tasks are performed in parallel. This significantly shortens the time period from starting a mobile application until the point the mobile application starts exchanging information over the internet connection with the backend system.

According to one embodiment, the requesting is triggered by an interaction of a user of the mobile application with the mobile device. This has the advantage that the internet connection is established only on demand of the user and not by default, for example. This may save the user additional cost that could be incurred by the default establishment of the internet connection.

According to one embodiment, the interaction comprises a selection of an icon of the mobile application on a user interface of the mobile device by the user.

The mobile device is usually equipped with a touch screen displaying different icons. The icons are each associated with an application (i.e. functions) that can be performed by the mobile device. After the user's touch gesture of an icon corresponding to its selected mobile application, the operating system of the mobile device starts the request of the internet connection before performing the mobile application specific tasks. This has the advantage that the internet connection is created only for the application being selected by the user.

According to one embodiment, the interaction comprises an unlock of the mobile device by the user.

The mobile device usually enters the screen touch lock mode when it is not in use. In order to use it, the user of the mobile device has to switch the mobile device into a screen touch unlock mode by activating an unlock button, for example. As soon as the screen touch is unlocked, the request (and then creation) of internet connection is triggered as to whether the user is planning to use a mobile application or not. This is advantageous as it further saves the time to establish internet connection that would otherwise be required by the mobile application. As technology advances and the access to internet becomes less and less expensive, this embodiment is favorable.

According to one embodiment, the method further comprises associating the creating step to a service thread, the loading step to an operating system thread by the operating system. The operating system thread starts the mobile application in an application thread.

This permits to concurrently execute the tasks that are required to start a mobile application by associating the different tasks to respective isolated units of execution. These units are managed by the operating system of the mobile device. This can be done, for example, by using the threads or the processes. This is advantageous in that the threads may run concurrently by sharing CPU time, or simultaneously on multiple processors.

According to one embodiment, the service, application and operating system threads are separate from one another, wherein the service thread is executing the operating system tasks.

Before the initialization of the mobile application is performed by the application thread, a number of tasks like creating the internet connection and loading the mobile application data need to be performed. In the prior art, those tasks are executed in sequence by the operating system. In contrary, the operating system in the present invention runs part of its tasks in a service thread. That is, the service thread executes the task of creating internet connection so that the operating system can run in parallel the other tasks.

According to one embodiment, the method further comprises scheduling the service, operating system and application threads to execute on a single processor and/or multi-processors according to the respective steps.

The concurrent execution of the threads can use multiple processors by, for example, executing one thread per processor. It can also use a single processor using time slicing between the threads. This can be done , for example, by allowing idle threads to be allocated to other threads. In both cases, the concurrent execution of the threads significantly fastens the processing speeds.

According to one embodiment, requesting the Internet connection comprises triggering a service to create the Internet connection in the service thread. That is, the execution of service thread tasks is managed by the operating system.

According to one embodiment, the method further comprises initializing the mobile application data from the internal memory in the application thread in parallel to creating the Internet connection; waiting for the Internet connection to be created and available for use by the mobile application; and receiving a notification that the Internet connection is created and available immediately after or during loading the mobile application data and starting the mobile application.

The application thread receives a notification as soon as the internet connection is established. This can happen either during the loading of the mobile application data or immediately after. Since the loading step is performed in parallel to the creating internet connection step, it may happen that the loading is done before the internet connection being established. Thus, the application thread receives a notification after loading of the mobile application data.

In another aspect, the invention relates to a computer-readable non-transitory storage medium comprising computer-readable instructions which, when executed by a processor, cause the processor to perform the method steps of anyone of the above embodiments.

In another aspect, the invention relates to a device for starting a mobile application on a mobile device, the device comprises at least one processor; and a memory for storing machine executable instructions, wherein the memory is in communication with the at least one processor, wherein execution of the instructions cause the at least one processor to request an Internet connection, and thereafter execute the steps of: creating the Internet connection; loading mobile application data into an internal memory of the mobile device in parallel to creating the internet connection; and starting the mobile application in parallel to creating the internet connection.

According to one embodiment, the memory further comprises an operating system thread that requests the Internet connection for the mobile application, loads the mobile application data in the internal memory of the mobile device, and starts the mobile application in a thread separate from the operating system thread; a service thread that creates the Internet connection in parallel to loading the mobile application data and starting the mobile application by the operating system thread and sends a notification that the Internet connection is created immediately after or during loading of the mobile application data and starting of the mobile application; and an application thread that receives the notification that the Internet connection is created and available.

In another aspect, the invention relates to a system comprising a mobile device including a device as described above; a radio access point that opens a free slot for establishing a mobile connection with the mobile device; and a backend server that includes a server thread to process the request sent from the mobile application over the created Internet connection and the established mobile connection.

An example of the radio access point is the enhanced Node-B (eNB) under Long Term Evolution (LTE) system or Node-B under Universal Mobile Telecommunications System (UMTS) system.

According to one embodiment, the radio access point comprises a relay node.

In another aspect the invention relates to an article of manufacture including a computer readable storage medium to tangibly store instructions, which when executed by a computer, cause the computer to request an Internet connection from an operating system of a mobile device for a mobile application; create the Internet connection in a service thread, wherein the service thread is separate from an operating system thread that executes tasks of the operating system; load mobile application data into internal memory of the mobile device in parallel to creating the Internet connection; and start the mobile application in an application thread in parallel to creating the Internet connection.

In one embodiment, to request the Internet connection comprises triggering a service to create the Internet connection in the service thread.

According to one embodiment, the article of manufacture further comprises instructions to cause the computer to initialize the mobile application data from the internal memory in the application thread in parallel to creating the Internet connection; wait for the Internet connection to be created and available for use by the mobile application; and receive a notification that the Internet connection is created immediately after or during loading the mobile application data and starting the mobile application.

According to one embodiment, the article of manufacture further comprises instructions to cause the computer to send a request from the mobile application to a backend system over the created Internet connection; and receive a response from the backend system to the sent request.

According to one embodiment, the article of manufacture further comprises instructions to cause the computer to process the response from the backend system in the application thread; and display a result in response to processing the response from the backend system.

According to one embodiment, to create the Internet connection comprises building up a mobile connection to a relay tower close to the mobile device; and waiting for an available free slot to be open at the relay tower.

According to one embodiment, the article of manufacture further comprises instructions to cause the computer to: establish the Internet connection over the mobile connection via network communication protocols.

In another aspect, the invention relates to a computerized method comprising requesting an Internet connection from an operating system of a mobile device for a mobile application; creating the Internet connection in a service thread, wherein the service thread is separate from an operating system thread that executes tasks of the operating system; loading mobile application data into internal memory of the mobile device in parallel to creating the Internet connection; and starting the mobile application in an application thread in parallel to creating the Internet connection.

According to one embodiment, requesting the Internet connection comprises triggering a service to create the Internet connection in the service thread.

According to one embodiment, the method further comprises initializing the mobile application data from the internal memory in the application thread in parallel to creating the Internet connection; waiting for the Internet connection to be created and available for use by the mobile application; and receiving a notification that the Internet connection is created immediately after or during loading the mobile application data and starting the mobile application.

According to one embodiment, the method further comprises sending a request from the mobile application to a backend system over the created Internet connection; and receiving a response from the backend system to the sent request.

According to one embodiment, the method further comprises processing the response from the backend system in the application thread; and displaying a result in response to processing the response from the backend system.

According to one embodiment, creating the Internet connection comprises building up a mobile connection to a relay tower close to the mobile device; and waiting for an available free slot to be open at the relay tower.

According to one embodiment, the method further comprises establishing the Internet connection over the mobile connection via network communication protocols.

In another aspect the invention relates to a system comprising a processor; a memory in communication with the processor. The memory comprises an operating system thread that requests an Internet connection for a mobile application, loads mobile application data in internal memory of a mobile device, and starts the mobile application in a thread separate from the operating system thread; a service thread that creates the Internet connection in parallel to loading the mobile application data and starting the mobile application by the operating system thread and sends a notification that the Internet connection is created immediately after or during loading of the mobile application data and starting of the mobile application; and an application thread that receives the notification that the Internet connection is created and available.

According to one embodiment, the application thread initializes the mobile application data from the internal memory and waits for the Internet connection to be created and available for use by the mobile application.

According to one embodiment, the application thread sends a request from the mobile application to a backend system over the created Internet connection.

According to one embodiment, the service thread builds up a mobile connection to a relay tower close to the mobile device and waiting for an available free slot to be open at the relay tower.

According to one embodiment, the system further comprises a server thread that processes the request sent from the mobile application at the backend system.

In another aspect, the invention relates to a system including a mobile device, a relay tower, and a backend server, the system comprises a mobile device including: an operating system thread that requests an Internet connection for a mobile application, a service thread the creates the Internet connection in parallel to loading the mobile application into a memory and initializing mobile application data from the memory, and an application thread that sends a request from the mobile application; a relay tower that opens a free slot for establishing a mobile connection with the mobile device; and a backend server that includes a server thread to process the request sent from the mobile application over the created Internet connection and the established mobile connection.

As will be appreciated by one skilled in the art, aspects of the present invention may be embodied as a system, method or computer program product. Accordingly, if not explicitly stated otherwise, aspects of the present invention may take the form of an entirely hardware embodiment, an entirely software embodiment (including firmware, resident software, micro-code, etc.) or an embodiment combining software and hardware aspects that may all generally be referred to herein as a 'module' or 'system'. Any combination of one or more computer-readable medium(s) may be utilized.

### Brief description of the drawings

In the following, preferred embodiments of the invention will be described in greater detail by way of example only making reference to the drawings in which:
Figure 1 is a block diagram illustrating a current technology for creating an Internet connection for a mobile application,
Figure 2 is a block diagram illustrating a method for creating an Internet connection for a mobile application,
Figure 3 is a flow diagram illustrating the method for creating an Internet connection in an operating system of a mobile device,
Figure 4 is block diagram illustrating a method for creating a network connection between a mobile device and a backend system, and
Figure 5 is a block diagram illustrating an exemplary computer system.

### Detailed description

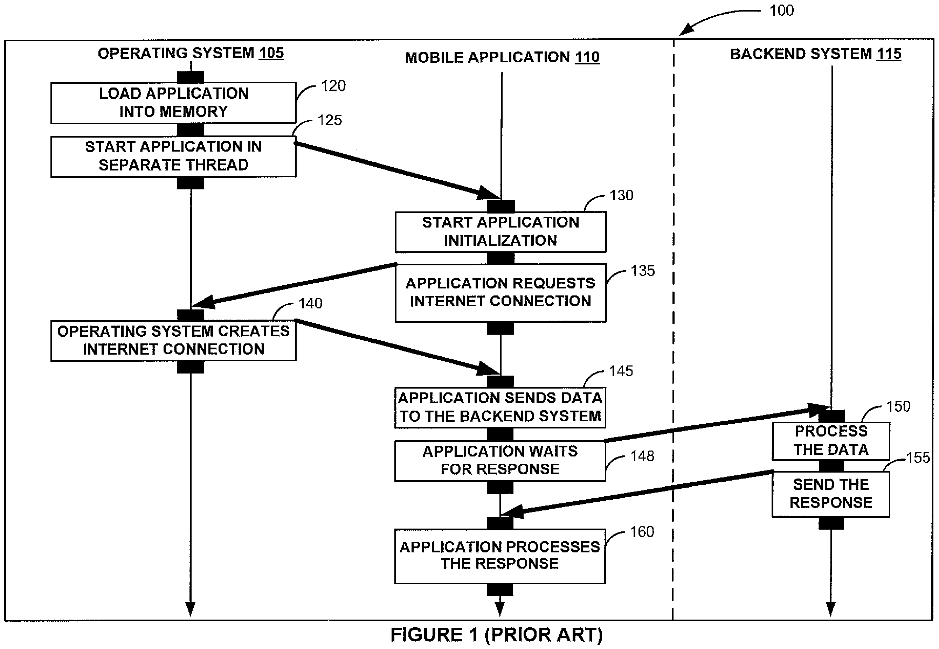

Figure 1 is a block diagram illustrating a current technology for creating an Internet connection for a mobile application. Process 100 illustrates the steps performed by the operating system 105 of a mobile device, the mobile application 110 hosted on the mobile device, and the backend system 115 to establish an Internet connection from the mobile device to the backend system 115. Thus, process 100 includes steps performed on the mobile device and steps performed on the backend system. Operating system 105 is the operating system installed on the mobile device. Mobile application 110 can be any online mobile application that sends and receives data over an Internet connection. Backend system 115 can be an enterprise system, an application server, or any other system that contains the data relevant for the business needs of the mobile application 110. At block 120, the operating system 105 of the mobile device loads the mobile application 110 into the main memory of the mobile device. The slowest and one of the possible scenarios include a faster memory (internal memory) and a slower memory (a mass storage device, e.g., a hard disk, a memory card, etc.) as part of the mobile device. Typically, the mobile application 110 resides in the slower memory and to be executed, the mobile application 110 has to be copied to the faster memory. Hence, the operating system 105 loads the mobile application 110 into the faster internal memory for execution.

At block 125, the mobile application 110 is started (e.g., creating descriptive and lookup tables) by the operating system 105, so that the execution of the mobile application 110 can begin. Typically, this takes some time. The control is handed over from the operating system 105 to the mobile application 110. At block 130, the mobile application 110 starts initialization of the internal memory for the application data. For example, the mobile application needs to build up user interfaces, perform initializations of some variables, load initialization files or data, perform some computations, and so on. Generally, in a simple scenario, the first thing that a mobile application needs to do is to read data from the Internet. For example, when searching a term from a mobile device, the user interface (UI) of a search engine is displayed on the mobile device screen, the user enters the search term, and selects the search button. It should be noted that the "search" scenario is just an example of a mobile application reading data from the Internet and any other scenario involving creating an Internet connection can be used. At block 135, the mobile application 110 sends a request to the operating system 105 to create an Internet connection for the user request. As soon as the mobile application 110 requests an Internet connection, the mobile application needs to access the operating system. The mobile application 110 may use an operating system API or library to request the Internet connection from the operating system 105. The control is handed over back to the operating system 105.

At block 140, the operating system 105 creates an Internet connection for the user request for the mobile application 110. At that moment, the Internet connection is being created between the mobile device and the backend system hosting the search engine data and functionality. First, the operating system 105 builds up a mobile connection to the next relay tower in the facility where the mobile devise is located and then a connection over the network (Internet) to the backend is established. Thus, on top of the mobile connection, there is a TCP/IP connection as well. Typically, this takes quite some time, because the mobile connection needs to wait for a free slot at the relay tower so that the Internet connection can be established. Generally, the relay towers are organized in a way that a certain number of connections can be open. Therefore, it may take quite some time (e.g., several seconds) until a free slot is available at the relay tower.

When eventually the Internet connection is established, the control is handed over again to the mobile application 110. At block 145, the mobile application starts sending data over the network (e.g., the Internet) to the backend system. Then the mobile application 110 needs to wait for a response from the backend system, at block 148. If there is a synchronized communication between the mobile device and the backend system, the mobile application 110 will wait for the backend server to respond. At block 150, the backend system processes the data received with the user request from the mobile application 110. At block 155, the backend system sends the response to the mobile application 110. At block 160, the mobile application 110 processes the response, e.g., displays a result on the mobile device screen.

The different steps are performed in different threads. For example, the steps performed by the operating system 105 are performed in an operating system thread, the steps performed by the mobile application 110 are performed in an application thread, and the steps performed by the backend system are performed in a server thread. The bold arrows between the blocks in process 100 show which thread will become active. Further, the connections between the blocks in the different threads end with thicker edges showing consumption of Central Processing Unit (CPU) time and energy by the given thread. This means that the CPU of the mobile device is busy processing these steps. The thicker part is shown in only one line at a time, meaning that the CPU time consumption is not overlapping (the CPU of the mobile device is not working in parallel) for processing the different threads. It can be seen that CPU time is always only consumed in one thread at a time - the operating system thread or the application thread.

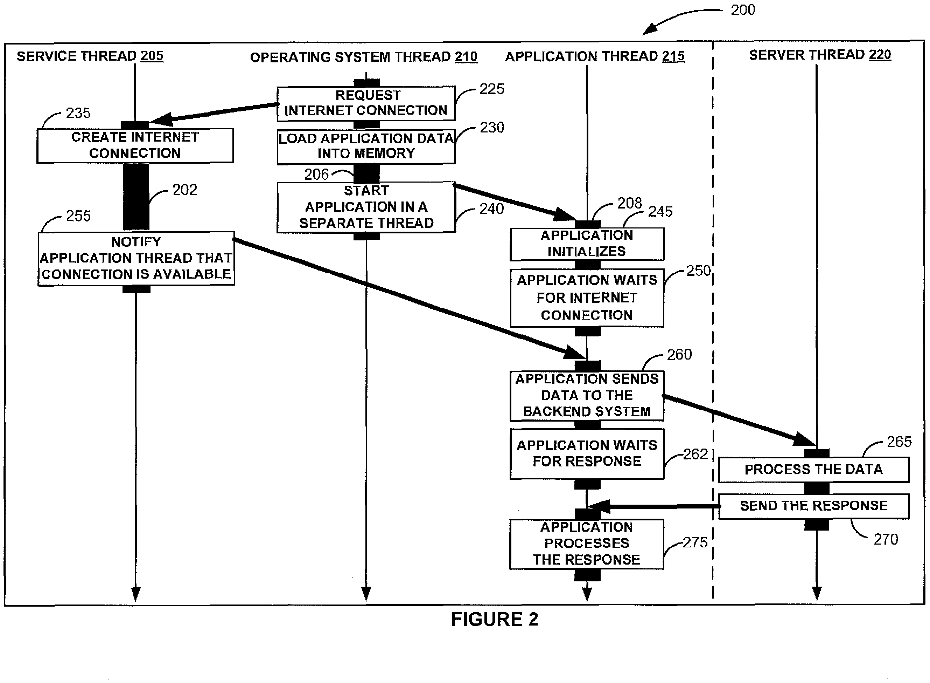

Figure 2 is a block diagram illustrating a method for creating an Internet connection for a mobile application hosted on a mobile device. If the operating system 105 of the mobile device triggers a service running in a separate thread from the operating system thread that immediately creates an Internet connection and notifies the mobile application 110 when the Internet connection is complete, then significant response time for the first request sent to a backend system, in communication with the mobile application, can be saved.

Process 200 includes different steps performed in different threads. The steps performed by the service that creates the Internet connection are performed in a service thread 205 (or a service process). The steps performed by the operating system of the mobile device are performed in an operating system thread (or process) 210, the steps performed by the mobile application are performed in an application thread (or process) 215, and the steps performed by the backend system are performed in a server thread (or process) 220. The bold arrows between the blocks in process 200 show which thread will become active. The connections between the blocks in the different threads end with thicker edges showing consumption of CPU time and energy by the given thread. This means that the CPU is busy processing these steps. In process 200, some thicker parts of the lines of the threads are overlapping, which means that the CPU is working and processing steps of the different threads in parallel. For example, at the time when there is a thicker part 202 of the service thread 205 between the two blocks, there are also thicker parts in the operating system thread 210 (e.g., part 206) and the application thread 215 (e.g., part 208). This means that the CPU is executing steps of the different threads in parallel. Thus, reducing the overall wait time by reducing the wait time between executing some of the steps. For example, like reducing the time the mobile connection waits for a free slot at a relay tower (or relay node) serving the mobile device. The time for creating the Internet connection is started earlier and ends earlier than in process 100. This leads to reduction of the time the user has to wait for receiving a response.

At block 225, the operating system requests an Internet connection by triggering a service running in the service thread 205 to create the Internet connection.

The service thread 205 works in parallel with the operating system thread 210 and the application thread 215. In case of a single processor device, a higher priority is associated with the service thread to first create the internet creation before the interleaving of all the threads. At block 230, the operating system loads the mobile application data in the internal memory of the mobile device. The mobile application is loaded into the internal memory of the mobile device, and in parallel and independently, the service starts creating the Internet connection in the service thread 205, at block 235. The service builds up a mobile connection, waits for a free slot for the mobile connection at the relay tower, and then a connection over the Internet to the backend is established (e.g., a TCP/IP connection). On top of establishing the mobile connection with the mobile carrier, the Internet connection (e.g., TCP/IP connection, an HTTP/HTTPS connection, etc.) is also being established by the service thread 205 in parallel to the execution of some of the steps of the operating system thread 210 and the application thread 215, where wait time is involved. Thus, overall reduction of the wait time is achieved.

While the service thread 205 creates the Internet connection, the operating system starts the mobile application in a separate thread, the application thread 215, at block 240. The application thread 215 becomes active. At block 245, the mobile application starts initialization of the internal memory for the application data. For example, the mobile application needs to build up user interfaces, perform initializations of some variables, computations, and so on. The initialization may be also performed in parallel to the Internet connection creation.

At block 250, the mobile application waits for a created Internet connection. Since, the creating of the Internet connection was delegated to the service in the service thread 205 at the beginning and being performed in parallel to the loading of the mobile application into the memory and the initialization of the application data, the Internet connection is available to the mobile application significantly earlier. Thus, the wait time for the Internet connection at block 250 is significantly short. At block 255, the service thread 205 notifies the application thread 215 that there is an available Internet connection, which the mobile application can use. At block 260, the mobile application sends data to the backend system over the created Internet connection. The mobile application then waits for a response from the backend system, at block 262. The server thread 220 becomes active. At block 265, the backend system processes the data received with the user request from the mobile application. At block 270, the backend system sends the response to the mobile application. At block 275, the mobile application processes the response, e.g., displays a result on the user interface of the mobile device.

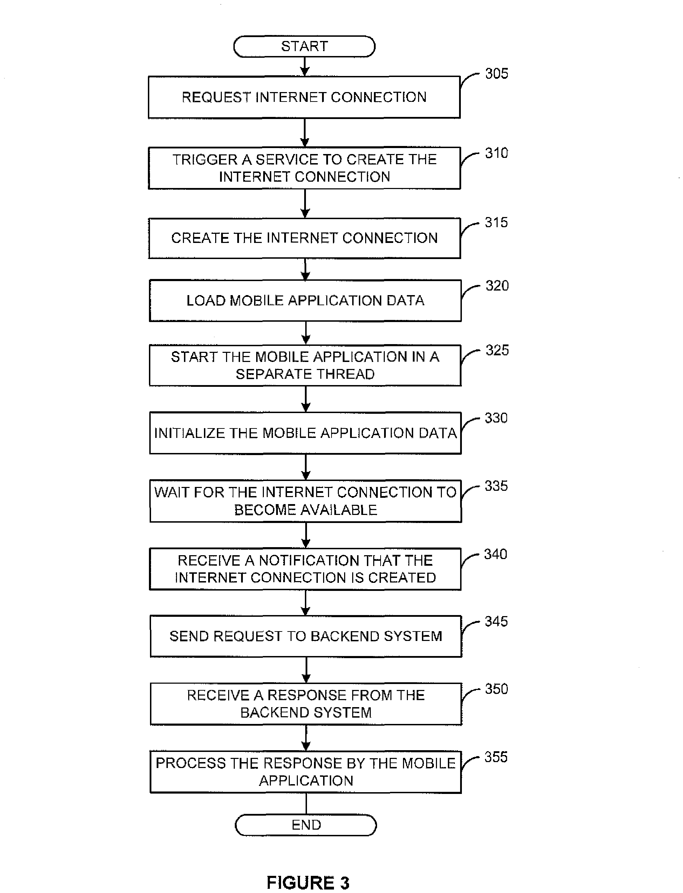

Figure 3 is a flow diagram illustrating the method for creating an Internet connection in an operating system of a mobile device. The Internet connection is created in parallel to loading the application data and starting the application. In case of a single processor device, a higher priority is associated with the service thread to first create the internet creation before the interleaving of all the threads. At block 305, the internet connection is requested from the operating system of a mobile device.
The internet connection is not requested from the mobile application installed on the mobile device, but from the operating system. The requesting may be performed in response to a selection of an icon of the mobile application on a user interface of the mobile device by a user of the mobile application or in response to an unlock of the mobile device by the user.

At block 310, a service is triggered from the operating system to create the Internet connection. The service is running in a service thread or process (such as service thread 205), the operating system of the mobile device is running in an operating system thread or process (e.g., operating system thread 210), the mobile application is running in an application thread or process (e.g., application thread 215), and the backend system processes the requests from the mobile device in a server thread or process (e.g., server thread 220).

At block 315, the Internet connection is created in the service thread. Creating the Internet connection includes creating a mobile connection to a relay tower in the area where the mobile device is located (i.e. serving the mobile device), waiting for a free slot at the relay tower for the mobile connection, establishing communication protocols (e.g., TCP/IP, HTTP/HTTPS), and so on, and then the connection over the Internet to the backend is established. The mobile application data is loaded into the main memory of the mobile device by the operating system in parallel to the creating of the Internet connection, at block 320. At block 325, the operating system thread 210 starts the mobile application in a separate thread, the application thread, from the operating system in parallel to the creation of the internet connection as well. At this point, the application thread becomes active. At block 330, the mobile application initializes the mobile application data in the memory in the application thread. At block 335, the mobile application waits for the Internet connection to become available. Since creating the Internet connection has been started earlier in the process, as a first step, the Internet connection is created and becomes available for use significantly early. Thus, the mobile application does not need to wait a long time for the Internet connection, as in process 100.

In one case, the Internet connection could already be available and no waiting would be necessary. For example, if the mobile application is a complex application that includes a lot of user interfaces that draw images, graphics, or charts, or render videos (or some other functionality that takes a lot of time for loading) at starting of the application and before the user enters some data, then loading of the application and starting the application in the application thread will take longer time than establishing the Internet connection. Therefore, after the mobile application data is loaded in the memory and the mobile application is started, the Internet connection will already be created and available for use by the mobile application immediately after the user enters some data in the user interface that requires response.

In another case, the mobile application itself may need to request the backend system to obtain some information needed for loading a given user interface, where no user input is required. For example, in a mobile application that shows the weather for different locations, at the start of the application, all data, images and charts are loaded in the memory and a request for creating an Internet connection is sent to the service thread in parallel. By the time mobile application data is loaded and the mobile application is started in a separate thread, the Internet connection is already created and available. Then, the mobile application sends a request to the backend system to obtain what the current weather is at a given location. In this way, by processing several steps in parallel in different threads, the overall wait time is shortened.

At block 340, a notification is received at the mobile application from the service thread that the Internet connection is created and available for use. At block 345, the mobile application sends a request to the backend system over the created Internet connection. The user request may include, but is not limited to, requesting data, sending data, or reading data from the backend system. The backend system processes the user request from the mobile application in the server thread. At block 350, a response is received at the mobile application from the backend system to the sent user request. At block 355, the mobile application processes the response in the application thread.

The method described herein for creating an internet connection in parallel to the loading and starting of the application to reduce the wait time of the mobile application, and hence the user wait time for a response, can be implemented as an optional feature in the operating system of a mobile device. This optional feature can be turned on and off by the user.

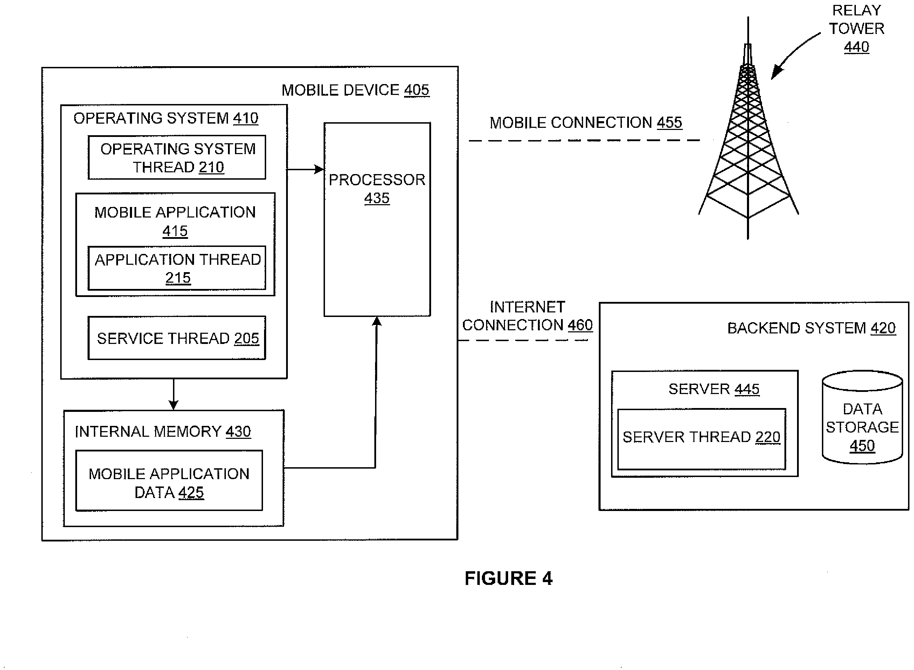

Figure 4 is a block diagram illustrating a method for creating a network connection between a mobile device and a backend system. Mobile device 405 is a typical handheld computing device that has a screen and/or a minimized keyboard. On mobile device 405, an operating system 410 is installed and running. The operating system 410 is a platform environment for mobile applications such as Palm OS^{®}, BlackBerry^{®}, Android^{®}, Symbian^{®}, and so on. The operating system 410 includes one or more mobile applications deployed and running, such as mobile application 415. The operating system 410 also includes an operating system thread (or process) 210 that performs tasks such as: requests network connections, loads mobile applications data 425 into internal memory 430, and so on. The operating system 410 also includes a service thread (or process) 205. The service thread 205 is responsible for creating an Internet connection 460 for mobile application 415 in parallel to the tasks performed by the operating system thread 210. Once the Internet connection is created and available for use, the service thread 205 notifies the mobile application 415. Mobile application 415 includes an application thread (or process) 215 that initializes the mobile application data into the internal memory of the mobile device 405, sends requests to backend system 420, processes the response received from the backend system 420, and so on.

The operating system 410 of the mobile device 405 is in communication with processor 435. Processor 435 is a unit in the mobile device 405 that performs the instructions of the operating system thread 210, the service thread 205, the application thread 215, and so on. The mobile device 405 also includes internal memory 430. Internal memory 430 is the primary (main) memory of the mobile device 405 (e.g., the random-access memory (RAM)). Internal memory 430 includes temporary mobile application data 425 loaded from the permanent storage of the mobile device (e.g., hard disk drive) by the operating system thread 210 needed for starting and executing mobile application 415. Internal memory 430 is in communication with the operating system 410 and the processor 435.

The service thread 205 of the operating system 410 creates the Internet connection 460 by firstly creating a mobile connection 455 to a relay tower 440. When the mobile connection 455 to the relay tower 440 is established, then the Internet connection 460 to the backend system 420 is created. After the Internet connection 460 is created, the service thread 205 notifies the application thread 215 for the available Internet connection 460. The application thread 215 sends a request to the backend system 420. The backend system 420 includes a server 445 such as an application server and a data storage unit 450. Server 445 includes a server thread (or process) 220 that processes the request sent from the mobile device 405. Data storage unit 450 includes business data needed for the mobile application 415.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

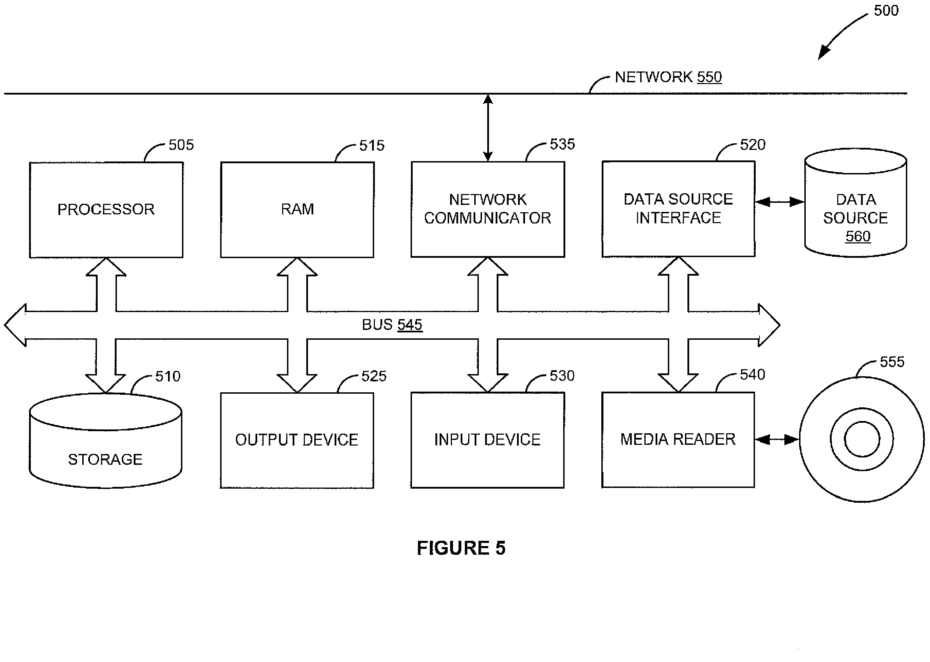

Figure 5 is a block diagram illustrating an exemplary computer system 500. The computer system 500 includes a processor 505 that executes software instructions or code stored on a computer readable storage medium 555 to perform the above-illustrated methods of the invention. The computer system 500 includes a media reader 540 to read the instructions from the computer readable storage medium 555 and store the instructions in storage 510 or in random access memory (RAM) 515. The storage 510 provides a large space for keeping static data where at least some instructions could be stored for later execution. The stored instructions may be further compiled to generate other representations of the instructions and dynamically stored in the RAM 515. The processor 505 reads instructions from the RAM 515 and performs actions as instructed. The computer system 500 further includes an output device 525 (e.g., a display) to provide at least some of the results of the execution as output including, but not limited to, visual information to users and an input device 530 to provide a user or another device with means for entering data and/or otherwise interact with the computer system 500. Each of these output 525 and input 530 devices could be joined by one or more additional peripherals to further expand the capabilities of the computer system 500. A network communicator 535 may be provided to connect the computer system 500 to a network 550 and in turn to other devices connected to the network 550 including other clients, servers, data stores, and interfaces, for instance. The modules of the computer system 500 are interconnected via a bus 545. Computer system 500 includes a data source interface 520 to access data source 560. The data source 560 can be access via one or more abstraction layers implemented in hardware or software. For example, the data source 560 may be access by network 550. In some embodiments the data source 560 may be accessed via an abstraction layer, such as, a semantic layer.

A data source 560 is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The block diagrams in the Figures illustrate the architecture, functionality, and operation of possible implementations of systems, methods and computer program products according to various embodiments of the present disclosure. In this regard, each block in the block diagrams may represent a module, segment, or portion of code, which comprises one or more executable instructions for implementing the specified logical function(s). It should also be noted that, in some alternative implementations, the functions discussed hereinabove may occur out of the disclosed order. For example, two functions taught in succession may, in fact, be executed substantially concurrently, or the functions may sometimes be executed in the reverse order, depending upon the functionality involved. It will also be noted that each block of the block diagrams, and combinations of blocks in the block diagrams, can be implemented by special purpose hardware-based systems that perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

### List of Reference Numerals

- 100: process
- 105: operating system
- 110: mobile application
- 115: backend system
- 120-160: blocks
- 200: process
- 202, 206, 208: lines
- 205: service thread
- 210: operating system thread
- 215: application thread
- 220: server thread
- 225-275: blocks
- 405: mobile device
- 410: operating system
- 415: mobile application
- 420: backend system
- 425: mobile application data
- 430: internal memory
- 435: processor
- 440: relay tower
- 445: server
- 450: data storage
- 455: mobile connection
- 460: internet connection
- 500: computer system
- 505: processor
- 510: storage
- 515: RAM
- 520: data source interface
- 525: output device
- 530: input device
- 535: network communicator
- 540: media reader
- 545: bus
- 550: network
- 555: computer readable storage medium
- 560: data source

## Claims

1. A computer-implemented method for starting a mobile application (415) on a mobile device (405), the method comprising requesting an Internet connection (460) from an operating system (410) of the mobile device (405) for the mobile application (415), and thereafter performing the steps of:
- creating the internet connection (460);
- loading mobile application data (425) into an internal memory (430) of the mobile device (405) in parallel to creating the internet connection (460); and
- starting the mobile application (415) in parallel to creating the internet connection (460).

2. The method of claim 1, wherein the requesting is triggered by an interaction of a user of the mobile application (415) with the mobile device (405).

3. The method of claim 2, wherein the interaction comprises a selection of an icon of the mobile application (415) on a user interface of the mobile device (405) by the user.

4. The method of claim 2, wherein to the interaction comprises an unlock of the mobile device (405) by the user.

5. The method of claim 1, further comprising associating the creating step to a service thread (205), the loading step to an operating system thread (210) by the operating system (410), wherein the operating system thread (210) starts the mobile application in an application thread (215).

6. The method according to claim 5, wherein the service, application and operating system threads (205, 210, 215) are separate from one another, wherein the service thread (205) is executing operating system (410) tasks.

7. The method of claim 5, further comprising scheduling the service, operating system and application threads (205,210,215) to execute on a single processor and/or multi-processors (505) according to the respective steps.

8. The method of claim 5, wherein requesting the Internet connection (460) comprises triggering a service to create the Internet connection (460) in the service thread (205).

9. The method of claim 5, further comprising:
- initializing the mobile application data (425) from the internal memory (430) in the application thread (215) in parallel to creating the Internet connection (460);
- waiting for the Internet connection (460) to be created and available for use by the mobile application (415); and
- receiving a notification that the Internet connection (460) is created and available immediately after or during loading the mobile application data (425) and starting the mobile application (415).

10. A computer-readable non-transitory storage medium comprising computer-readable instructions which, when executed by a processor (505), cause the processor (505) to perform the method of anyone of the previous claims.

11. A device for starting a mobile application (415) on a mobile device (405), the device comprising:
- at least one processor (505); and
- a memory for storing machine executable instructions, wherein the memory is in communication with the at least one processor (505), wherein execution of the instructions cause the at least one processor (505) to request an Internet connection (460), and thereafter execute the steps of:
• creating the Internet connection (460);
• loading mobile application data (425) into an internal memory (430) of the mobile device (405) in parallel to creating the internet connection (460); and
• starting the mobile application (415) in parallel to creating the internet connection (460).

12. The device of claim 11, wherein the memory further comprises:
- an operating system thread (210) that requests the Internet connection (460) for the mobile application (415), loads the mobile application data (425) in the internal memory (430) of the mobile device (405), and starts the mobile application (415) in a thread separate from the operating system thread (210);
- a service thread (205) that creates the Internet connection (460) in parallel to loading the mobile application data (425) and starting the mobile application (415) by the operating system thread (210) and sends a notification that the Internet connection (460) is created immediately after or during loading of the mobile application data (425) and starting of the mobile application (415); and
- an application thread (215) that receives the notification that the Internet connection (460) is created and available.

13. A system comprising:
- a mobile device (405) including a device according to claims 11 and 12.
- a radio access point (440) that opens a free slot for establishing a mobile connection (455) with the mobile device (405); and
- a backend server (420) that includes a server thread (220) to process the request sent from the mobile application (415) over the created Internet connection (460) and the established mobile connection (455).

14. The system of claim 13, wherein the radio access point (440) comprises a relay node.
